# EUROPÄISCHE PATENTSCHRIFT

(11) **EP 0 451 928 B1**
(45) Veröffentlichungstag und Bekanntmachung des Hinweises auf die Patenterteilung: **08.06.1994**
(21) Anmeldenummer: 91250073.3
(22) Anmeldetag: 15.03.1991
(51) Int. Cl.: A01K 1/015, C04B 38/10

(54) **Verfahren zum Herstellen eines porösen Keramikgranulates zur Verwendung als Ad- bzw. Absorptionsmittel, insbesondere Tierstreu**
Process for the fabrication of porous ceramic granules used as an adsorbing or absorbing agent, particularly for animal litter
Procédé de fabrication de granulés céramiques poreux utilisés comme agent d'adsorption ou d'absorption, plus particulièrement comme litière d'animaux

(30) Priorität: 05.04.1990 DE 4011254
(43) Veröffentlichungstag der Anmeldung: 16.10.1991
(73) Patentinhaber: EFFEM GmbH, D-27283 Verden (DE)
(72) Erfinder: Lang, Rüdiger, W-5401 Brey (DE); Czempik, Klaus, Dr., W-4950 Minden (DE); Hornig, Rolf, W-2816 Kirchlinteln (DE)
(74) Vertreter: Goddar, Heinz J., Dr.

(56) Entgegenhaltungen:
- WO-A-85/04862
- DE-A- 1 508 485
- DE-A- 3 207 623
- DE-C- 557 324
- FR-A- 2 365 536
- GB-A- 695 795
- GB-A- 1 101 460

## Beschreibung

Die Erfindung betrifft ein Verfahren zum Herstellen eines porösen Keramikgranulates mit Porengrößen von < 1 mm, bei dem Ton; Kalkspat, Quarzsand, Dolomit, Feldspat, Schamotte, Kieselgur und/oder Sepiolith als Zuschlagstoff; Wasser; Verflüssigungsmittel sowie Tensid gemischt und in einer an sich bekannter Dispergieranlage unter Druck (1 bis 10 bar) durch Druckluftzufuhr bei einer Temperatur zwischen Raumtemperatur und 95°C aufgeschäumt werden, wobei ggf. zur Herstellung einer hochviskosen, thixotropen, eigenstabilen Schaumsuspension dem Verflüssigungsmittel entgegenwirkende Mittel eingesetzt werden, und daraufhin die geschäumte Mischung ggf. zu Tonformkörpern geformt wird, die Tonformkörper bei einer Temperatur zwischen Raumtemperatur und 200°C getrocknet werden, die getrockneten Tonformkörper ggf. zerkleinert und unter Rückführen des Feinanteiles zur Ausgangsmischung gesiebt werden und schließlich die Tonformkörper bzw. die zerkleinerten Tonformkörper mit ausgewähltem Korngrößenbereich bei einer Produkttemperatur oberhalb 600°C gebrannt werden, zur Verwendung als Ad- bzw. Absorptionsmittel, insbesondere Tierstreu, sowie ein danach herstellbares Produkt.

Zum Zwecke der Ad- bzw. Absorption von Flüssigkeiten und Gasen, insbesondere aber auch zur Verwendung als Tierstreu, wurde bisher vorteilhafterweise unter anderem ein zerkleinerter poröser Keramikkörper eingesetzt, der nach einem Verfahren herstellbar ist, das aus der DE-PS 34 14 965 bekannt ist. Dieses Material gilt insbesondere gegenüber anderen aus dem Stand der Technik bekannten Ad- bzw. Absorptionsmaterialien, z.B. auf der Basis von Calciumsilikathydrat, als kostengünstig und besitzt große Variationsmöglichkeiten hinsichtlich der Produktparameter, insbesondere auch hinsichtlich des Aussehens. Trotz der vorteilhaften Eigenschaften dieses Materials, insbesondere auch im Hinblick auf dessen Wasseraufnahmevermögen und Geruchsbindung, bestand weiterhin das Bedürfnis, das nach dem bekannten Verfahren hergestellte Keramikmaterial, insbesondere im Hinblick auf seine Verwendung als Tierstreu, weiterzuentwickeln.

Der Erfindung liegt daher die Aufgabe zugrunde, das bekannte Verfahren dahingehend weiterzubilden, daß eine weitere Verbesserung der porösen Struktur der ad- bzw. absorbierenden Teilchen erreicht werden kann, um das Wasseraufnahmevermögen, die Geruchsbingdung usw. des Materials zu verbessern.

Erfindungsgemäß wird diese Aufgabe dadurch gelöst, daß 25 bis 45 Gew.-% Ton, 0 bis 40 Gew.-% Kalkspat, Quarzsand, Dolomit, Feldspat, Schamotte, Kieselgur und/oder Sepiolith, 20 bis 50 Gew.-% Wasser, 0,1 bis 1,0 Gew.-% Verflüssigungsmittel sowie 0,1 bis 1,0 Gew.-% Tensid eingesetzt und die Tonformkörper bzw. die zerkleinerten Tonformkörper mit einem Restfeuchtegehalt von 5 bis 25 % in einen vorgeheizten Brennofen gegeben und bei einer vorbestimmten Produkttemperatur aus dem Bereich zwischen 750 und 1050°C gebrannt werden.

In einer bevorzugten Ausführungsform der Erfindung wird für den Brennprozeß ein indirekt gefeuerter Drehrohrofen verwendet.

Dabei ist es besonders vorteilhaft, das gebrannte Produkt unmittelbar aus dem Brennofen in eine Kühltrommel zu überführen, in die, parallel zu indirekter Kühlung mit Luft, Wasser direkt eingesprüht wird.

Überraschenderweise kann durch die erfindungsgemäß gewählten Mengen der Ausgangssubstanzen und Bedingungen beim Brennen der Tonformkörper deren poröse Inpenstruktur deutlich weiterverbessert, insbesondere weiter vergleichmäßigt werden, was zu einer Optimierung des Wasseraufnahmevermögens, der Geruchsbildung und anderer damit in Zusammenhang stehender Produkteigenschaften führt. Dabei ergaben sich insbesondere für den Keramikfachmann überraschende Aspekte: Zum einen war es bisher nicht bekannt, daß ein keramisches Material mit dem angegebenen Wassergehalt von 5 bis 25 % den Temperaturschock beim Einbringen in den vorgeheizten Brennofen, dessen Temperatur zu diesem Zeitpunkt etwa 700 bis 800°C beträgt, ohne nennenswerte Zerstörung aushält. Zum anderen bestand, insbesondere durch die Lehre der DE-PS 34 14 965 das Vorurteil, daß eine Behandlung der Tonformkörper bei höheren Produkttemperaturen als 800°C zu einer Versprödung des Materials und einer Verringerung der inneren Oberfläche führen würde, was sich nachteilig auf die gewünschten Eigenschaften des Produktes als Ad- bzw. Absorptionsmittel ausgewirkt hätte. Es war daher völlig überraschend, daß durch die erfindungsgemäßen Maßnahmen bei äußerst gümstiger Wirtschaftlichkeit des Verfahrens eine deutlich verbesserte, insbesondere gleichmäßigere Porenstruktur erzielt werden konnte.

Darüberhinaus war es überraschend, daß bei den gegebenen Produktionsbedingungen auch eine positive thermochemische Beeinflussung der Farbe des keramischen Brenngutes ermöglicht wurde. Das im Ton enthaltene Eisen führt normalerweise durch Oxidation zu rötlichen und durch Reduktion zu weißlichen Farben im Produkt. Da beim keramischen Brennprozeß in der Regel direkt befeuert wird, wird die jeweils gewünschte Ofenatmosphäre über die Ofenbrenner eingestellt. Bei indirekter Befeuerung, die bei der vorliegenden Erfindung bevorzugt angewendet wird, und der im Brennraum üblicherweise vorhandenen Luftmenge von 5 bis 10 m³ pro Tonne Brenngut wäre eigentlich eine zumindest teilweise Oxidation, d.h. Rötlichfärbung des Materials, zu erwarten gewesen. Dennoch wird unter den gegebenen Produktionsbedingungen, wie an der weißlichen Farbe des Endproduktes eindeutig zu erkennen, das im Ton enthaltene Eisen entgegen der Erwartung reduziert. Die Gründe für diese Reduktion sind noch nicht vollständig aufgeklärt. Man vermutet allerdings, daß hierbei mehrere Faktoren zusammenspielen, nämlich die relativ kurze Brennzeit, eine Wasserdampf- bzw. Wasserstoffbildung in den Poren mit örtlicher Schutzgas/Reaktionsgasbildung und eine Wasserdampf- bzw. Wasserstoffbildung im gesamten Brennraum, der die Oxidationswirkung des Sauerstoffs weitgehend neutralisiert.

Die vorteilhafterweise unmittelbar an das Brennen der Tonformkörper anschließende Sturzkühlung durch direkte Einsprühung von Wasser in die Kühltrommel, bei der das Produkt innerhalb von wenigen Minuten von etwa 1000°C auf bis zu 60°C abkühlt, ist für ein derartiges keramisches Material ebenfalls als extrem anzusehen, so daß es erstaunlich war, daß eine derartig schnelle Abkühlung, die natürlich aus wirtschaftlichen Gründen sehr interessant ist, zu keinerlei negativer Beeinflussung der Produkteigenschaften führte.

### BEISPIEL

400 kg Westerwälder Ton mit 10 % Restfeuchte werden mit 200 kg Wasser und 460 kg Feldspat mit 5% Restfeuchte sowie 2 kg Natriumpolyphosphat und 4,5 kg Natriumdodecylsulfonat in einen Mischer gegeben, etwa 5 min stark gerührt und die entstehende, hoch thixotrope Tonsuspension in eine Formanlage geführt und in Strängen von 1 cm Durchmesser in eine Trocknungsvorrichtung gegeben. Nach Erreichen des erwünschten Restfeuchtegehalts wird das Schaumtonmaterial in einen Walzenbrecher geleitet, in dem es zerkleinert wird. Die verkleinerten Schaumtonpartikel werden anschließend in einer Siebanlage in eine Kornfraktion mit Größen zwischen 1,0 und 5,0 mm, die zum Brennofen weitergeleitet wird, und eine Kornfraktion, die Korngrößen unterhalb von 1,0 mm aufweist und zur Ausgangsmischung zurückgeführt wird, aufgetrennt. Die zum Brennofen weitergeleiteten Schaumtonteilchen werden in einen kontinuierlichen arbeitenden auf 750 bis 1050°C vorgeheizten Ofen eingebracht. Das gebrannte Keramikprodukt wird unmittelbar aus dem Brennofen in eine Kühltrommel trommel überführt, in der, parallel zu indirekter Luftkühlung, direkt Wasser eingesprüht wird. Nach wenigen Minuten kann das Produkt bereits zur Verpackungsanlage weitergeleitet werden.

Die so hergestellten Materialien zeichnen sich durch folgende Materialparameter aus:
pH-Wert: 7,3 - 7,5
Wasseraufnahmevermögen: 150 - 190 Gew.-%
Innere Oberfläche: 100 - 200 m²/g
Porendurchmesser: < 0,8 mm

## Patentansprüche

1. Verfahren zum Herstellen eines porösen Keramikgranulates mit Porengrößen von < 1 mm, bei dem Ton; Kalkspat, Quarzsand, Dolomit, Feldspat, Schamotte, Kieselgur und/oder Sepiolith als Zuschlagstoff; Wasser; Verflüssigungsmittel sowie Tensid gemischt und in einer an sich bekannter Dispergieranlage unter Druck (1 bis 10 bar) durch Druckluftzufuhr bei einer Temperatur zwischen Raumtemperatur und 95°C aufgeschäumt werden, wobei ggf. zur Herstellung einer hochviskosen, thixotropen, eigenstabilen Schaumsuspension dem Verflüssigungsmittel entgegenwirkende Mittel eingesetzt werden, und daraufhin die geschäumte Mischung ggf. zu Tonformkörpern geformt wird, die Tonformkörper bei einer Temperatur zwischen Raumtemperatur und 200°C getrocknet werden, die getrockneten Tonformkörper ggf. zerkleinert und unter Rückführen des Feinanteiles zur Ausgangsmischung gesiebt werden und schließlich die Tonformkörper bzw. die zerkleinerten Tonformkörper mit ausgewähltem Korngrößenbereich bei einer Produkttemperatur oberhalb 600°C gebrannt werden, zur Verwendung als Ad- bzw. Absorptionsmittel, insbesondere Tierstreu, dadurch gekennzeichnet, daß 25 bis 45 Gew.-% Ton, 0 bis 40 Gew.-% Kalkspat, Quarzsand, Dolomit, Feldspat, Schamotte, Kieselgur und/oder Sepiolith, 20 bis 50 Gew.-% Wasser, 0,1 bis 1,0 Gew.-% Verflüssigungsmittel sowie 0,1 bis 1,0 Gew.-% Tensid eingesetzt und die Tonformkörper bzw. die zerkleinerten Tonformkörper mit einem Restfeuchtegehalt von 5 bis 25 % in einen vorgeheizten Brennofen gegeben und bei einer vorbestimmten Produkttemperatur aus dem Bereich zwischen 750 und 1050°C gebrannt werden.

2. Verfahren nach Anspruch 1, dadurch gekennzeichnet, daß für den Brennprozeß ein indirekt gefeuerter Drehrohrofen verwendet wird.

3. Verfahren nach Anspruch 1 oder 2, dadurch gekennzeichnet, daß das gebrannte Produkt unmittelbar aus dem Brennofen in eine Kühltrommel überführt wird, in die, parallel zu indirekter Kühlung mit Luft, Wasser direkt eingesprüht wird.

## Claims

1. Process for producing a porous ceramic granulated material having pore sizes of < 1 mm, in which clay; calcite; quartz sand, dolomite, feldspar, chamotte, kieselguhr and/or sepiolite as aggregate; water; liquefier and surfactant are mixed and foamed in dispersion equipment known per se under pressure (from 1 to 10 bar) by feeding in compressed air at a temperature between room temperature and 95°C, where for the production of a highly viscous, thixotropic, inherently stable foam suspension agents counteracting the liquefier are optionally employed, and the foamed mixture is then optionally shaped to give shaped clay bodies, the shaped clay bodies are dried at a temperature between room temperature and 200°C, the dried shaped clay bodies are optionally comminuted and sieved with recycling of the fines to the starting mixture and finally the shaped clay bodies or the comminuted shaped clay bodies having a selected particle size range are fired at a product temperature above 600°C, for use as adsorbent or absorbent, particularly animal litter, characterized in that from 25 to 45% by weight of clay, from 0 to 40% by weight of calcite, quartz sand, dolomite, feldspar, chamotte, kieselguhr and/or sepiolite, from 20 to 50% by weight of water, from 0.1 to 1.0% by weight of liquefier and from 0.1 to 1.0% by weight of surfactant are employed and the shaped clay bodies or the comminuted shaped clay bodies having a residual moisture content of from 5 to 25% are placed in a preheated firing kiln and are fired at a predetermined product temperature in the range between 750 and 1050°C.

2. Process according to Claim 1, characterized in that the firing is carried out with an indirectly fired rotating-tube kiln is used.

3. Process according to Claim 1 or 2, characterized in that the fired product is directly transferred from the firing kiln into a cooling drum into which, in parallel to indirect cooling with air, water is sprayed directly.

## Revendications

1. Procédé de préparation de granulés céramiques poreux à des dimensions de pores inférieures à 1 mm dans lequel on mélange de l'argile ; de la calcite, du sable de quartz, de la dolomie, du feldspath, de la chamotte, du kieselguhr et/ou de la sépiolithe en tant qu'additif ; de l'eau ; un agent fluidifiant et un agent tensioactif, et on fait gonfler en mousse dans un appareil de dispersion de type connu en soi, sous pression (1 à 10 bar) par envoi d'air comprimé à une température comprise entre la température ambiante et 95°C, en utilisant le cas échéant, pour la préparation d'une suspension en mousse à haute viscosité, thixotrope, stable par elle-même, des agents qui s'opposent à l'action de l'agent fluidifiant, après quoi on moule le mélange gonflé en mousse éventuellement en corps moulés d'argile, on sèche les corps moulés d'argile à une température comprise entre la température ambiante et 200°C, on broie éventuellement les corps moulés en argile séchés et on tamise en recyclant les fines au mélange de départ, et finalement on cuit les corps moulés en argile ou les corps moulés en argile broyés à un intervalle déterminé des dimensions de grains à une température de produit supérieure à 600°C, pour l'utilisation en tant qu'agent adsorbant et absorbant, en particulier en tant que litières pour animaux, caractérisé en ce que l'on utilise de 25 à 45% en poids d'argile, de 0 à 40% en poids de calcite, de sable de quartz, de dolomie, de feldspath, de chamotte, de kieselguhr et/ou de sépiolithe, de 20 à 50% en poids d'eau, de 0,1 à 1,0% en poids d'agent fluidifiant et de 0,1 à 1,0% en poids d'agent tensioactif et on envoie les corps moulés en argile ou les corps moulés en argile broyés à une teneur en humidité résiduelle de 5 à 25% dans un four de cuisson chauffé au préalable et on les cuit à une température de produit déterminée dans l'intervalle de 750 à 1050°C.

2. Procédé selon revendication 1, caractérisé en ce que, pour l'opération de cuisson, on utilise un four rotatif tubulaire à chauffage indirect.

3. Procédé selon revendication 1 ou 2, caractérisé en ce que le produit cuit est transféré directement du four de cuisson dans un tambour de refroidissement dans lequel, parallèlement à un refroidissement indirect par l'air, on pulvérise directement de l'eau.
